# EUROPEAN PATENT SPECIFICATION

(11) **EP 2 797 472 B1**
(45) Date of publication and mention of the grant of the patent: **09.03.2016**
(21) Application number: 12806498.7
(22) Date of filing: 21.12.2012
(51) Int. Cl.: A47J 31/36

(54) **INFUSION ASSEMBLY FOR COFFEE MACHINES**
INFUSIONSANORDNUNG FÜR KAFFEEMASCHINEN
ENSEMBLE D'INFUSION POUR MACHINES À CAFÉ

(30) Priority: 30.12.2011 IT VR20110240
(43) Date of publication of application: 05.11.2014
(73) Proprietor: Componenti Vending S.p.A., 20122 Milano (IT)
(72) Inventor: FIORITO, Mino, 20081 Abbiategrasso (IT); DITRANI, Marco, 20090 Trezzano Sul Naviglio (IT)
(74) Representative: Modiano, Micaela Nadia
(86) International application number: PCT/EP2012/076666
(87) International publication number: WO 2013/098241

(56) References cited:
- EP-A1- 1 867 257
- EP-A2- 0 419 398
- US-A1- 2006 254 428

## Description

The present invention relates to an infusion assembly for coffee machines and in particular for coffee machines for professional use of the automatic type.

Traditionally, professional coffee machines are substantially constituted by a boiler which is connected, at its inlet point, to a feeder conduit which is connected to the water mains and, at its outlet point, to a conduit for dispensing hot water under pressure leading into one or more ports for dispensing below which an infusion chamber can be associated in a non-removable manner.

The infusion chamber is connected to a handle and can be filled with ground coffee by the machine operator.

Depending on the necessity to dispense one or two coffees, infusion chambers of different sizes are used and, consequently, they are filled with different quantities of ground coffee.

Before stably connecting the infusion assembly under the dispensing port, the operator proceeds to press, with an adapted presser body, the ground coffee into the infusion chamber.

Recently coffee machines for professional use have been offered, which are commercially designated as automatic and have, under the dispensing port for hot water under pressure, at least one infusion chamber into which the ground coffee is directly dosed by a dosage assembly.

Once the quantity of ground coffee needed for the production of a coffee has been dosed, a presser body that presses the ground coffee is moved, typically by way of a rod-and-crank assembly.

After such operation, the machine actuates the dispensing of hot water under pressure which passes through the infusion chamber in order to then be dispensed into a container that is arranged underneath the infusion chamber.

Discharge means are provided, which can be activated before each dispensing and are adapted to discharge the residual ground coffee from the infusion chamber.

It is evident that automatic machines have made it possible to automate many operations that are traditionally performed by the operator such as the dosing and the pressing of the ground coffee inside the infusion chamber thus ensuring, at the same time, better consistency and repeatability of these operations.

With particular reference to the professional machines used in bars, motorway services cafés etc., technical solutions have been devised in order to make it possible, according to requirements, to supply the quantity of coffee necessary to the infusion chamber in order to make one or two coffees.

In this case, the pressing of the ground coffee inside the infusion chamber is not performed with a rod-and-crank assembly (which has a fixed stroke) but is typically performed by moving the presser body with respect to the infusion chamber by way of drive means which mesh with an endless screw that is connected to a supporting stem of the presser body.

Normally, the arrest of the drive means, and thus of the movement of the presser body, is subject to exceeding a certain threshold value of the current absorbed by the drive means: in this manner, it is possible to vary the stroke based on the quantity of dosed ground coffee inside the infusion chamber thus achieving optimal pressing.

The solution described above, although valid from a conceptual point of view, is not however devoid of drawbacks.

In particular, it is necessary to use drive means, typically constituted by an electric motor, which are particularly expensive since they need to ensure a sufficient torque to achieve the pressing of the coffee in the infusion chamber and since they need to be associated with a device for measuring the absorbed current.

Moreover there is the difficulty of adapting the solutions known today to conventional dispensing assemblies, of the type with movement of the presser with a rod-and-crank assembly.

The document EP-1867257 discloses a brewing unit for automatic coffee machines.

The aim of the present invention is to solve the above-mentioned problems and overcome the drawbacks, by providing an infusion assembly for coffee machines which is extremely reliable in use.

Within this aim, an object of the invention is to make available an infusion assembly for coffee machines which can easily be applied to conventional machines.

Another object of the invention is to provide an infusion assembly for coffee machines which is low-cost, so as to make its use advantageous from an economic viewpoint.

This aim and these and other objects which will become more apparent hereinafter are all achieved by an infusion assembly according to claim 1.

Further characteristics and advantages of the invention will become more apparent from the description of some preferred, but not exclusive, embodiments of an infusion assembly for coffee machines according to the invention, illustrated by way of non-limiting example in the accompanying drawings wherein:

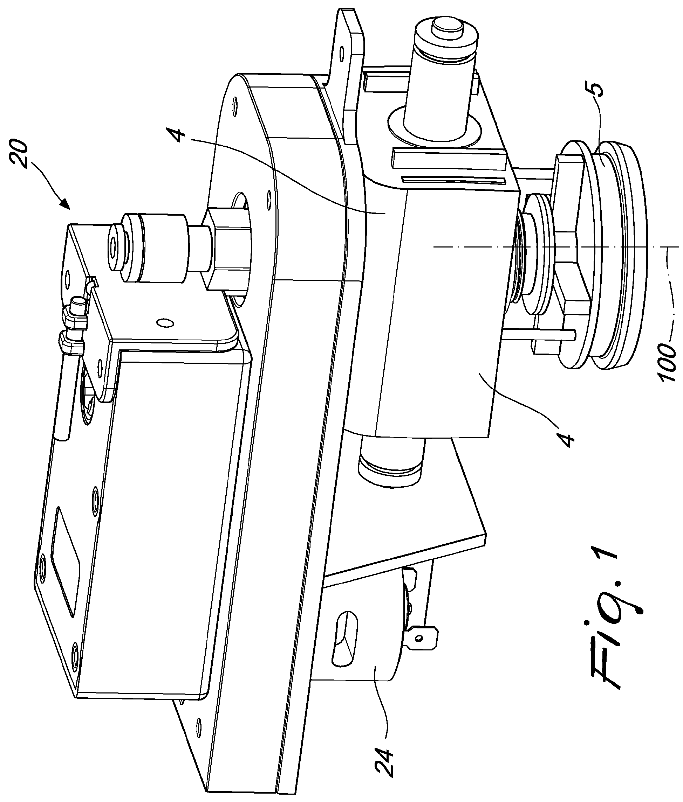

Figure 1 is a perspective view of a portion of the infusion assembly according to the invention;

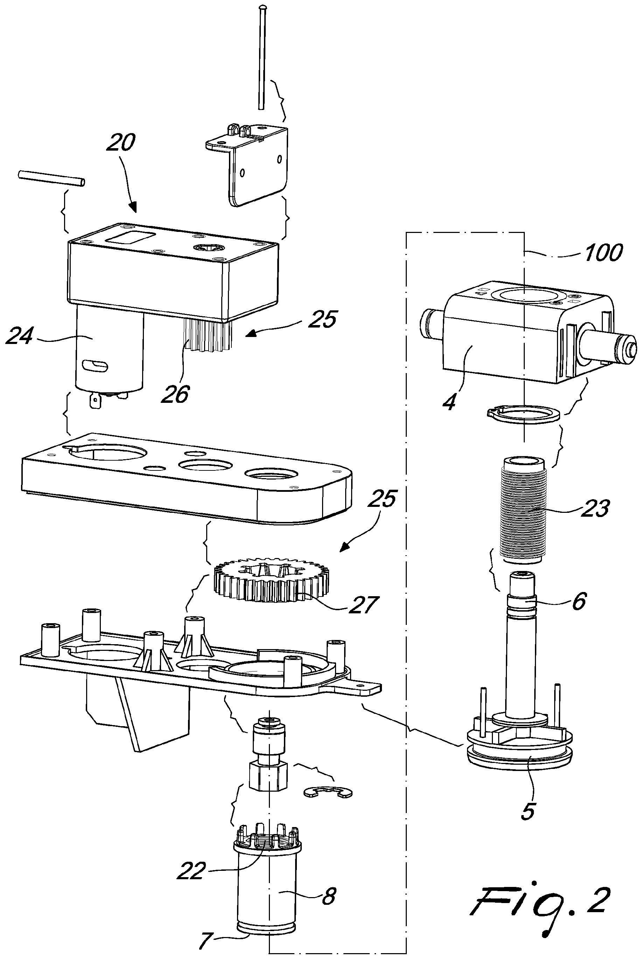

Figure 2 is an exploded view of the perspective view in Figure 1;

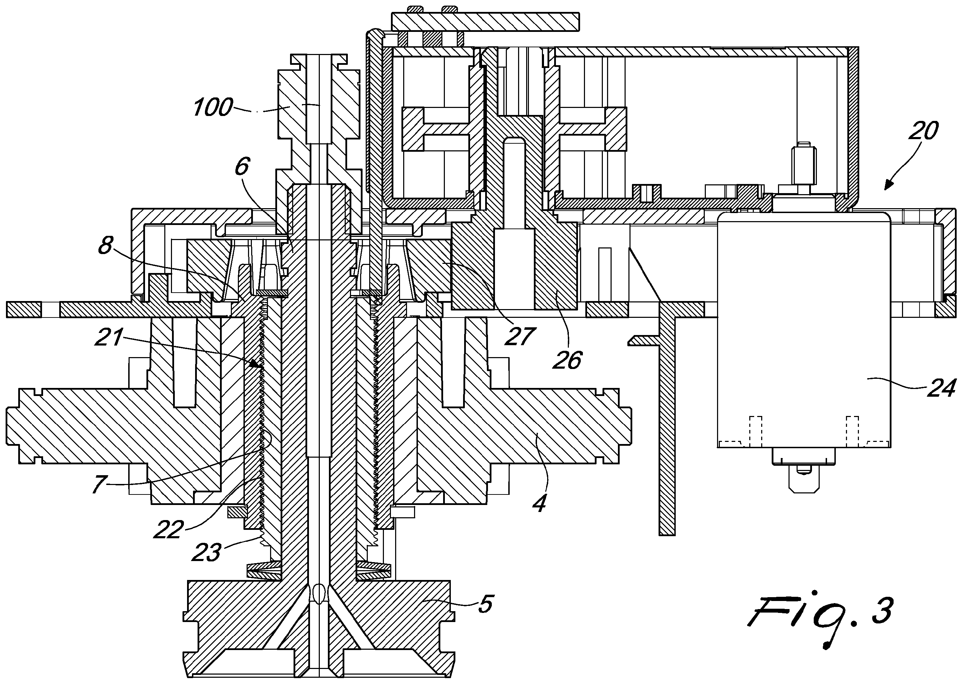

Figure 3 is a longitudinal sectional view of the portion of the infusion assembly shown in Figure 1; and

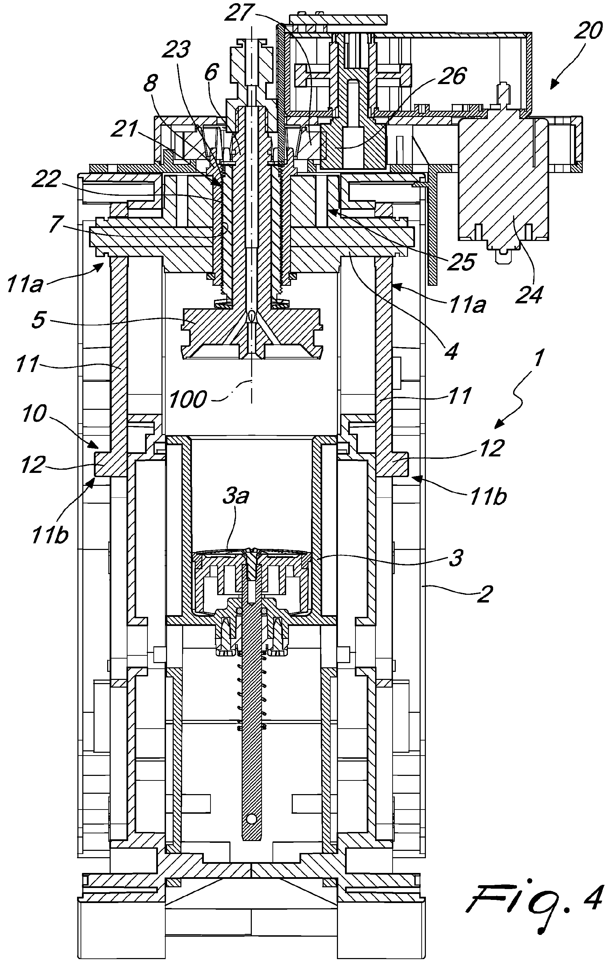

Figure 4 is a longitudinal sectional view of the infusion assembly according to the invention.

In the embodiments illustrated, individual characteristics shown in relation to specific examples may in reality be interchangeable with other, different characteristics, existing in other embodiments.

With reference to the figures, the present invention relates to an infusion assembly, generally designated by the reference numeral 1, for coffee machines.

The infusion assembly 1 comprises a supporting structure 2 for an infusion chamber 3 into which at least two different quantities of ground coffee can be dosed by a dosage assembly.

Typically, the infusion chamber 1 can receive, from the dosage assembly, the quantity of ground coffee necessary for dispensing one coffee or two coffees.

According to the present invention, the infusion assembly 1 comprises a supporting body 4 for a presser 5 which is designed to press the dosed ground coffee inside the infusion chamber 3.

In particular, the supporting body 4 can move, on command, between an inactive position, in which it is arranged spaced from the infusion chamber 3, and an active position in which it is arranged close to the infusion chamber 3 and wherein the presser 5 presses the dosed ground coffee inside the infusion chamber 3.

The presser 5 is, in turn, moveable with respect to the supporting body 4 along an adjustment direction, designated with the reference numeral 100, in order to vary, on command, the distance between the presser 4 and the bottom 3a of the infusion chamber 3 when the supporting body 5 is in the active position.

Advantageously, the movement of the presser 5 with respect to the supporting body 4 along the adjustment direction 100 is performed when the supporting body 4 is in the inactive position and, according to a particularly important aspect of the present invention, such movement occurs as a function of the quantity of ground coffee dosed each time into the infusion chamber 3 by the dosage assembly.

Advantageously, the infusion assembly 1 comprises first means, generally designated with the reference numeral 10, of moving the supporting body 4 between the inactive position and the active position and vice versa.

According to a preferred embodiment, the first movement means 10 comprise a rod-and-crank assembly that is actuated by first motor means of the type normally employed to move the presser in infusion assemblies of coffee machines that are designed to dispense a single coffee at a time.

By way of example, the rod-and-crank assembly can have a pair of lateral linkages 11 which are rotatably connected, at first ends 11 a thereof, to the supporting body 4 and kinematically connected, at respective coupling pivots 12, which are arranged advantageously proximate to the second ends 11b, to a command cam (not shown in the figures) which is actuated in rotation about an axis which is substantially perpendicular to the adjustment direction 100.

Conveniently, the movement of the supporting body 4 from the inactive condition to the active condition and vice versa occurs along a direction substantially parallel to the adjustment direction 100.

Conveniently, the infusion assembly 1 has a device 20 for moving the presser 5 with respect to the supporting body 4 along the adjustment direction 100.

In this regard, it is possible to associate the presser 5 with an elongated body 6 which extends along the adjustment direction 100 and is guided along a guiding element 7 which is defined, in turn, on the supporting body 4.

The adjustment device 20 can be constituted by a screw-and-nut coupling 21 between the elongated body 6 and the guiding element 7.

With reference to the embodiment shown in the figures, the guiding element 7 comprises a bushing 8 which forms internally a female thread 22 and is supported rotatably by the supporting body 4.

In this case, the elongated body 6 is stably associated with a threaded portion 23, for example formed on the outer surface of a hollow cylinder, which is engageable, in use, with the female thread 22.

The movement device 20 comprises an electric motor 24 which is connected kinematically, by way of kinematic interconnection means 25, to the elongated body 6 so as to cause the rotation of the elongated body 6 about its own longitudinal axis.

The rotation of the elongated body 6 about its own longitudinal axis, which is parallel to and, advantageously, coincides with the adjustment direction 100, causes, consequently, owing to the screw-and-nut coupling 21, the movement of the presser 5 along the adjustment direction 100 thus making it possible to vary the distance between the presser 4 and the bottom 3a of the infusion chamber 3 when the supporting body 5 is in the second, active position.

The kinematic interconnection means 25 comprise, for example, an actuation gear 26 which is actuated in rotation by the electric motor 24 and meshes with an actuation gear 27 for the bushing 8.

The rotation of the bushing 8 causes, thanks to the screw-and-nut coupling 21, the movement of the hollow cylinder on which the threaded portion 23 is formed (and thus of the presser 5) along the adjustment direction 100.

Advantageously, the adjustment device 20, and more specifically the electric motor 24, is functionally connected to the dosage assembly so as to adjust the distance between the presser 4 and the bottom 3a of the infusion chamber 3 when the supporting body 5 is in the second, active position as a function of the quantity of coffee dosed each time into the infusion chamber 3 by the dosage assembly.

The use of the infusion assembly for coffee machines according to the invention is evident from the foregoing description.

In the starting condition, with the supporting body 4 in the inactive position, the presser 5 is in the lower stroke limit position in order to allow complete pressing of a quantity of mixture, dosed into the infusion chamber 3, corresponding to one coffee, by way of actuation of the rod-and-crank assembly.

If the dosage assembly doses, into the infusion chamber, a quantity of coffee that exceeds the amount necessary for dispensing one coffee, then the electric motor will proceed to move, by way of the screw-and-nut coupling 21, the presser 5 away from the infusion chamber 3 so as to enable, once the dosing of the coffee and the consequent adjustment by the adjustment device 20 have been completed, the pressing by way of the actuation of the rod-and-crank assembly 10.

All the characteristics of the invention, indicated above as advantageous, convenient or similar, may also be missing or be substituted by equivalent characteristics.

The invention, thus conceived, is susceptible of numerous modifications and variations, all of which are within the scope of the appended claims.

In practice it has been found that in all the disclosed embodiments the invention has achieved the intended aim and objects.

In practice the dimensions employed may be any, according to requirements.

Moreover, all the details may be substituted by other, technically equivalent elements.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. An infusion assembly (1) for coffee machines, comprising a supporting structure (2) for an infusion chamber (3) within which it is possible to dose, from a dosage assembly, at least two different quantities of ground coffee, further comprising a supporting body (4) for a presser (5) which is designed to press the dosed ground coffee inside said infusion chamber (3), said supporting body (4) being movable on command between an inactive position, in which it is arranged spaced from said infusion chamber (3), and an active position, in which it is arranged close to said infusion chamber (3) and wherein said presser presses the dosed ground coffee inside said infusion chamber (3), said presser (5) being movable with respect to said supporting body (4) along an adjustment direction (100) in order to vary on command the distance between said presser (4) and the bottom (3a) of said infusion chamber (3) when said supporting body (5) is in said active position, the movement of said presser (5) with respect to said supporting body (4) along said adjustment direction (100) being performed when said supporting body (4) is in said inactive position, **characterized in that** said presser (5) is movable with respect to said supporting body (4) along said adjustment direction (100) as a function of the quantity of dosed ground coffee in said infusion chamber (3).

2. The infusion assembly (1) according to claim 1, **characterized in that** it comprises first means (10) for moving said supporting body (4) between said inactive position and said active position.

3. The infusion assembly (1) according to claim 2, **characterized in that** said first movement means (10) comprise a rod-and-crank assembly that is actuated by first motor means.

4. The infusion assembly (1) according to one or more of the preceding claims, **characterized in that** it comprises a device (20) for moving said presser (5) with respect to said supporting body (4) along said adjustment direction (100).

5. The infusion assembly (1) according to one or more of the preceding claims, **characterized in that** said presser (5) is associated with an elongated body (6) which extends along said adjustment direction (100) and is guided along a guiding element (7) formed on said supporting body (4), said adjustment device (20) comprising a screw-and-nut coupling (21) between said elongated body (6) and said guiding element (7).

6. The infusion assembly (1) according to claim 5, **characterized in that** said guiding element (7) comprises a bushing (8) which forms internally a female thread (22), supported rotatably by said supporting body (4), and **in that** said elongated body (6) is associated stably with a threaded portion (23) that can engage said female thread (22).

7. The infusion assembly (1) according to claim 4, **characterized in that** said movement device (20) comprises an electric motor (24) which is connected kinematically, by way of kinematic interconnection means (25), to said elongated body (6) so as to cause the rotation of said elongated body (6) about its own longitudinal axis and consequently, owing to said screw-and-nut coupling (21), the movement of said presser (5) along said adjustment direction (100).

8. The infusion assembly (1) according to claim 7, **characterized in that** said kinematic interconnection means (25) comprise an actuation gear (26) which is actuated to rotate by said electric motor (24) and meshes with an actuation gear (27) for said bushing (8).

9. The infusion assembly (1) according to one or more of the preceding claims, **characterized in that** said adjustment device (20) is functionally connected to said dosage assembly.

## Patentansprüche

1. Ein Aufgussaufbau (1) für Kaffeemaschinen, der eine tragende Struktur (2) für eine Aufgusskammer (3) umfasst, in der es möglich ist, aus einem Dosieraufbau mindestens zwei verschiedene Mengen von gemahlenem Kaffee zu dosieren, weiter einen tragenden Körper (4) für eine Pressvorrichtung (5) umfassend, die konstruiert ist, um den dosierten gemahlenen Kaffee in der Aufgusskammer (3) zu pressen, wobei der tragende Körper (4) auf Befehl zwischen einer inaktiven Position, in der er von der Aufgusskammer (3) beabstandet angeordnet ist, und einer aktiven Position, in welcher er nahe an der Aufgusskammer (3) angeordnet ist, beweglich ist, und wobei die Pressvorrichtung den dosierten gemahlenen Kaffee in der Aufgusskammer (3) presst, wobei die Pressvorrichtung (5) im Verhältnis zu dem tragenden Körper (4) entlang einer Einstellrichtung (100) beweglich ist, um auf Befehl den Abstand zwischen der Pressvorrichtung (4) und dem Boden (3a) der Aufgusskammer (3) zu variieren, wenn der tragende Körper (5) sich in der aktiven Position befindet, wobei die Bewegung der Pressvorrichtung (5) im Verhältnis zu dem tragenden Körper (4) entlang der Einstellrichtung (100) durchgeführt wird, wenn der tragende Körper (4) in der inaktiven Position ist, **dadurch gekennzeichnet, dass** die Pressvorrichtung (5) im Verhältnis zu dem tragenden Körper (4) entlang der Einstellrichtung (100) in Abhängigkeit von der Menge an dosiertem gemahlenem Kaffee in der Aufgusskammer (3) bewegt werden kann.

2. Der Aufgussaufbau (1) gemäß Anspruch 1, **dadurch gekennzeichnet, dass** er erste Mittel (10) zum Bewegen des tragenden Körpers (4) zwischen der inaktiven Position und der aktiven Position umfasst.

3. Der Aufgussaufbau (1) gemäß Anspruch 2, **dadurch gekennzeichnet, dass** die ersten Bewegungsmittel (10) einen Kurbelwellen-Stangenaufbau umfassen, der von ersten Motormitteln betätigt wird.

4. Der Aufgussaufbau (1) gemäß einem oder mehreren der obigen Ansprüche, **dadurch gekennzeichnet, dass** er eine Vorrichtung (20) umfasst, um die Pressvorrichtung (5) im Verhältnis zu dem tragenden Körper (4) entlang der Einstellrichtung (100) zu bewegen.

5. Der Aufgussaufbau (1) gemäß einem oder mehreren der obigen Ansprüche, **dadurch gekennzeichnet, dass** die Pressvorrichtung (5) mit einem verlängerten Körper (6) verbunden ist, der sich entlang der Einstellrichtung (100) erstreckt und entlang einem Führungselement (7) geführt wird, das an dem tragenden Körper (4) geformt ist, wobei die Einstellvorrichtung (20) eine Schrauben-und-Mutter-Kupplung (21) zwischen dem verlängerten Körper (6) und dem Führungselement (7) umfasst.

6. Der Aufgussaufbau (1) gemäß Anspruch 5, **dadurch gekennzeichnet, dass** das Führungselement (7) eine Buchse (8) umfasst, die innen ein Innengewinde (22) bildet, die drehbar von dem tragenden Körper (4) getragen wird, und dadurch, dass der verlängerte Körper (6) fest mit einem Gewindeabschnitt (23) verbunden ist, der in das Innengewinde (22) eingreifen kann.

7. Der Aufgussaufbau (1) gemäß Anspruch 4, **dadurch gekennzeichnet, dass** die Bewegungsvorrichtung (20) einen Elektromotor (24) umfasst, der kinematisch, durch kinematische Verbindungsmittel (25), mit dem verlängerten Körper (6) verbunden ist, um die Drehung des verlängerten Körpers (6) um seine eigene Längsachse und aufgrund der Schrauben-und-Mutter-Kupplung (21) folglich die Bewegung der Pressvorrichtung (5) entlang der Einstellrichtung (100) zu veranlassen.

8. Der Aufgussaufbau (1) gemäß Anspruch 7, **dadurch gekennzeichnet, dass** die kinematischen Verbindungsmittel (25) ein Betätigungsrad (26) umfassen, das von dem Elektromotor (24) betätigt wird, um sich zu drehen, und in ein Antriebsrad (27) für die Buchse (8) eingreift.

9. Der Aufgussaufbau (1) gemäß einem oder mehreren der obigen Ansprüche, **dadurch gekennzeichnet, dass** die Einstellvorrichtung (20) funktionell mit dem Dosieraufbau verbunden ist.

## Revendications

1. Ensemble d'infusion (1) pour machines à café comprenant une structure de support (2) pour une chambre d'infusion (3) à l'intérieur de laquelle il est possible de doser, grâce à un ensemble de dosage, au moins deux quantités différentes de café moulu, comprenant en outre un corps de support (4) pour un dispositif presseur (5) qui est conçu pour presser le café moulu dosé à l'intérieur de ladite chambre d'infusion (3), ledit corps de support (4) étant mobile sur commande entre une position inactive, dans laquelle il est agencé à l'écart de la chambre d'infusion (3), et une position active, dans laquelle il est agencé près de ladite chambre d'infusion (3), et dans lequel ledit dispositif presseur presse le café moulu dosé à l'intérieur de ladite chambre d'infusion (3), ledit dispositif presseur (5) étant mobile par rapport au dit corps de support (4) dans une direction d'ajustement (100) afin de faire varier sur commande la distance entre ledit dispositif presseur (5) et la partie inférieure (3a) de ladite chambre d'infusion (3) lorsque ledit corps de support (4) est dans ladite position active, le mouvement dudit dispositif presseur (5) par rapport au dit corps de support (4) dans ladite direction d'ajustement (100) étant exécuté lorsque ledit corps de support (4) est dans ladite position inactive, **caractérisé en ce que** ledit dispositif presseur (5) est mobile par rapport au dit corps de support (4) dans ladite direction d'ajustement (100) en fonction de la quantité de café moulé dosé dans ladite chambre d'infusion (3).

2. Ensemble d'infusion (1) selon la revendication 1, **caractérisé en ce qu'**il comprend des premiers moyens (10) permettant de déplacer ledit corps de support (4) entre ladite position inactive et ladite position active.

3. Ensemble d'infusion (1) selon la revendication 2, **caractérisé en ce que** lesdits premiers moyens de déplacement (10) comprennent un ensemble de biellette de liaison/arbre coudé qui est actionné par des premiers moyens formant moteur.

4. Ensemble d'infusion (1) selon l'une ou plusieurs des revendications précédentes, **caractérisé en ce qu'**il comprend un dispositif (20) permettant de déplacer ledit dispositif presseur (5) par rapport au dit corps de support (4) dans ladite direction d'ajustement (100).

5. Ensemble d'infusion (1) selon l'une ou plusieurs des revendications précédentes, **caractérisé en ce que** ledit dispositif presseur (5) est associé à un corps allongé (6) qui s'étend dans ladite direction d'ajustement (100) et est guidé le long d'un élément de guidage (7) formé sur ledit corps de support (4), ledit dispositif d'ajustement (20) comprenant un couplage par vis et écrou (21) entre ledit corps allongé (6) et ledit élément de guidage (7).

6. Ensemble d'infusion (1) selon la revendication 5, **caractérisé en ce que** ledit élément de guidage (7) comprend une bague de palier (8) qui forme, à l'intérieur, un filetage femelle (22), supportée, pour tourner, par ledit corps de support (4), et **en ce que** ledit corps allongé (6) est fixement associé à une partie filetée (23) qui peut s'engager sur ledit filetage femelle (22).

7. Ensemble d'infusion (1) selon la revendication 4, **caractérisé en ce que** ledit dispositif de déplacement (20) comprend un moteur électrique (24) qui est raccordé cinématiquement, grâce à des moyens d'interconnexion cinématique (25), au dit corps allongé (6) de manière à provoquer la rotation dudit corps allongé (6) autour de son propre axe longitudinal et, par conséquent, le déplacement du dit dispositif presseur (5) dans ladite direction d'ajustement (100) grâce au dit couplage par vis et écrou (21).

8. Ensemble d'infusion (1) selon la revendication 7, **caractérisé en ce que** lesdits moyens d'interconnexion cinématique (25) comprennent un engrenage d'actionnement (26) qui est actionné, pour tourner, par ledit moteur électrique (24) et s'engrène avec un engrenage d'actionnement (27) de ladite bague de palier (8).

9. Ensemble d'infusion (1) selon l'une ou plusieurs des revendications précédentes, **caractérisé en ce que** ledit dispositif d'ajustement (20) est fonctionnellement raccordé, au dit ensemble de dosage.
